# EUROPEAN PATENT APPLICATION

(11) **EP 4 715 901 A1**
(43) Date of publication of application: **25.03.2026**
(21) Application number: 24201888.5
(22) Date of filing: 23.09.2024
(51) Int. Cl.: H01M 4/48, H01M 4/525, H01M 4/58, H01M 4/62, H01M 10/0525, C08F 8/32, C08F 22/40, C08F 222/40, C08K 5/3415, H01M 4/02

(54) **HALOGEN-FREE POLYMERIC BINDER FOR CATHODE**

(71) Applicant: Belenos Clean Power Holding AG, 2502 Biel/Bienne (CH)
(72) Inventor: MARTINEZ-IBANEZ, Maria, 01010 Vitoria-Gasteiz (ES); ARMAND, Michel, 75014 Paris (FR); SANTIAGO SANCHEZ, Alexander, 01200 Salvatierra/Agurain (ES); FRAILE INSAGURBE, David, 01010 Vitoria-Gasteiz (ES); SANCHEZ DIEZ, Eduardo, 48940 Leioa (ES); ALDALUR CEBERIO, Itziar, 20001 Donostia (ES); ZUGAZUA GANADO, Oihane, 01010 Vitoria-Gasteiz (ES); PORCARELLI, Luca, 4052 Basel (CH); PEREGO, Daniele, 5400 Baden (CH)
(74) Representative: ICB SA

(57) **Abstract**

The present invention relates to a halogen-free polymeric binder for a cathode according to formula (I) 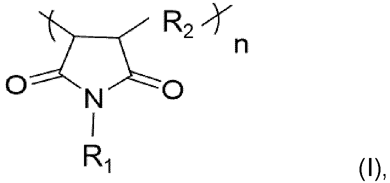 wherein R₁ is (CH₂)ₓ-R₃, wherein x is between 1 and 20 and R₃ is H or CN; R₂ is C₁-C₁₀ alkyl or C₂-C₁₀ alkenyl, and n is between 50 and 5000. The present invention further relates to a cathode comprising the halogen-free polymeric binder, and to methods of producing the halogen-free polymeric binder.

## Description

### Technical field of the invention

The present invention relates to halogen-free polymeric binders for cathodes. The invention further relates to cathodes comprising the halogen-free polymeric binders, and to methods of producing the halogen-free polymeric binders.

### Background

Recently, the battery industry has started to move away from fluorine-containing binders for electrodes, in particular cathodes, due to several significant problems and disadvantages. Environmentally, the production and disposal of fluorine-based materials like polyvinylidene fluoride (PVDF) result in the release of persistent organic pollutants that do not degrade easily and can cause long-term ecological damage. These processes are also associated with significant greenhouse gas emissions, intensifying climate change. Health and safety concerns are critical as well, since manufacturing and handling these materials expose workers to hazardous chemicals, and battery fires can release highly toxic gases such as hydrogen fluoride, posing severe risks to both humans and the environment.

Performance-wise, the use of fluorine-containing binders such as PVDF requires the use of toxic organic solvents like N-methyl-2-pyrrolidone (NMP) for electrode fabrication, which complicates the manufacturing and recycling processes. NMP is not only hazardous to human health but also environmentally damaging, making the process of recycling batteries more challenging and less sustainable. Additionally, the dependence on fluorine-based materials is becoming increasingly untenable due to growing regulatory pressures worldwide, as governments and regulatory bodies impose stricter limitations on the use of hazardous substances in industrial processes. All these factors contribute to the industry's drive to find safer, more sustainable alternatives to fluorine-containing binders.

### Summary of the invention

It is an aim of the present invention to overcome one or more of the foregoing drawbacks. It is an aim of the present invention to provide halogen-free polymeric binders for electrodes for batteries, in particular for cathodes. It is an aim to provide binders for electrodes which have a lower environmental pressure thanks to the absence of halogens, in particular fluoride. It is an aim to produce such binders by means of processes that limit the use of harmful solvents to a minimum, or even exclude the need for such solvents and have thus a lower environmental footprint.

It is a further aim to provide electrodes, in particular cathodes, comprising such a halogen-free polymeric binder, wherein the cathodes have a performance that is at least similar to, and possibly even better, than existing cathodes comprising halogen-containing binders, such as PVDF. This performance includes both mechanical properties, ease of handling the cathode for assembly in a battery, and the electrochemical performance of the cathode in the battery.

In other words, the invention aims at providing processes and binders which do not comprise halogen atoms and are thus more sustainable, while equalling the performance of cathodes comprising the binders when compared to halogen-comprising cathodes known in the art.

A first aspect of the present invention discloses a halogen-free polymeric binder for a cathode as set out in the appended claims.

The halogen-free polymeric binder is according to formula (I) 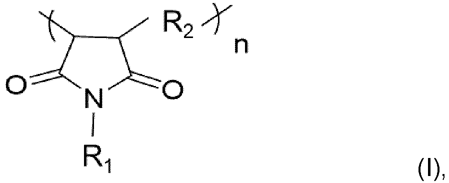 wherein
R₁ is (CH₂)ₓ-R₃, wherein x is between 1 and 20, and R₃ is H or CN;
R₂ is C₁-C₁₀ alkyl or C₂-C₁₀ alkenyl; and
n is between 50 and 5000.

A first particularly preferred example of the halogen-free polymeric binder is a binder wherein x is 6, R₃ is CN and R₂ is (CH₂)₂. A second particularly preferred example of the halogen-free polymeric binder is a binder wherein x is 10, R₃ is H and R₂ is (CH₂)₂.

A second aspect of the present invention discloses a cathode for a battery as set out in the appended claims. The cathode comprises a halogen-free polymeric binder according to the first aspect of the invention.

Advantageously, the cathode comprises between 75 % and 95 % by weight, preferably between 80 % and 95 % by weight, more preferably between 85 % and 92 % by weight, for example 90 % by weight of an active material, based on the total weight of the cathode.

Advantageously, the cathode comprises between 1 % and 15 % by weight, preferably between 2 % and 12 % by weight, more preferably between 5 % and 10 % by weight of an electrically conductive compound, based on the total weight of the cathode.

Advantageously, the cathode comprises between 1 % and 15 % by weight, preferably between 2 % and 12 % by weight, more preferably between 5% and 10% by weight of a halogen-free polymeric binder according to the first aspect of the invention, based on the total weight of the cathode.

Advantageously, the cathode comprises between 75 % and 95 % by weight of the active material, between 1 % and 15 % by weight of the electrically conductive compound and 1 % and 15% by weight of the halogen-free polymeric binder according to the first aspect of the invention, based on the total weight of the cathode.

Advantageously, the sum of the % by weight of the active material, the electrically conductive compound and the inventive halogen-free polymeric binder in the cathode is 100 %, i.e., the cathode advantageously consists of the active material, the electrically conductive compound and the inventive halogen-free polymeric binder. The skilled person will understand that when the sum of the three components is to be 100 %, the cathode will comprise more than 1 % by weight of the of the electrically conductive compound and more than 1 % by weight of the inventive binder in order to arrive at 100 %, for example 75 % by weight of active material and 12.5 % by weight of each of the electrically conductive compound and the inventive binder, or 90 % by weight of active material, 3 % by weight of the electrically conductive compound and 7 % by weight of the inventive binder.

Advantageously, the cathode has a porosity of at least 20 %, preferably at least 25 %, more preferably at least 30 %, such as at least 40 %, wherein the porosity is expressed as the ratio of the density of the cathode to the theoretical density of the cathode, wherein the theoretical density of the cathode is calculated from the composition of the cathode and the density of each individual compound in the cathode.

Advantageously, the active material comprises or substantially consists of one or more of Lithium Nickel Cobalt Manganese Oxide (NMC), LiFePO₄ and V₂O₅. Preferred examples of NMC include LiNi_{0.8}Mn_{0.1}Co_{0.1}O₂ (NMC811) and LiNi_{0.6}Mn_{0.2}Co_{0.2}O₂ (NMC622).

Advantageously, the electronically conductive compound comprises carbon. Carbon can be present in forms known in the art, such as carbon nanotubes or carbon black.

A non-limiting example of a cathode of the invention is a cathode comprising between 85 % and 95 % by weight of NMC, between 2 % and 10% of a carbon black-comprising electrically conductive compound and between 2 % and 10 % by weight of a halogen-free polymeric binder of the first aspect, based on the total weight of the cathode.

Advantageously, the cathode consists of NMC, a carbon black-comprising electrically conductive compound and an inventive halogen-free binder, i.e., the cathode does not comprise further components (additives) and the sum of the % by weight of these three components is advantageously 100 %. A particularly preferred example of such a cathode is a cathode consisting of 90 % by weight of NMC, 5 % by weight of a carbon black-comprising electrically conductive compound and 5 % by weight of an inventive halogen-free binder.

A further non-limiting example of a cathode of the invention is a cathode comprising between 75 % and 85 % by weight of LiFePO₄ (LFP), between 5 % and 15 % of a carbon black-comprising electrically conductive compound and between 5 % and 15 % by weight of a halogen-free polymeric binder of the first aspect, based on the total weight of the cathode.

Advantageously, the cathode consists of LFP, a carbon black-comprising electrically conductive compound and an inventive halogen-free binder, i.e., the cathode does not comprise further components (additives) and the sum of the % by weight of these three components is advantageously 100 %. A particularly preferred example of such a cathode is a cathode consisting of 80 % by weight of LFP, 10 % by weight of a carbon black-comprising electrically conductive compound and 10% by weight of an inventive halogen-free binder.

A third aspect of the present invention discloses a method for producing a halogen-free polymeric binder as set out in the appended claims. The halogen-free polymeric binder is according to the first aspect of the present invention.

The method comprises reacting an amino-derivative according to H₂N-R₁, wherein R₁ is as hereinabove described, with 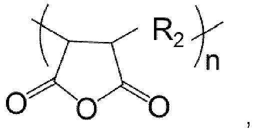 wherein R₂ and n are as hereinabove described.

The reaction takes place in the presence of dimethylformamide.

The reaction takes place at a temperature T₁ between 15 °C and 80 °C, more preferably between 20 °C and 60 °C, such as room temperature or 50 °C.

The reaction leads to the formation of an intermediate polymer. Advantageously, the intermediate polymer does not comprise a closed ring in its molecular structure, in particular no imide ring.

The intermediate polymer is subjected to imide ring closing, thereby forming the halogen-free polymeric binder. The step of imide ring closing can be performed by heating the intermediate polymer to a temperature T₂ between 100 °C and 250 °C, preferably between 125 °C and 200 °C, more preferably between 150 °C and 180 °C. Alternatively, the imide ring closing step can be performed at T₁ in the presence of a catalyst. In other words, using a catalyst for the imide ring closing can be performed without the requirement of heating the intermediate polymer to T₂.

Advantageously, when the imide ring is closed by heating the intermediate polymer to T₂, the heating step comprises heating to an intermediate temperature T₃, wherein T₃ is higher than T₁ and lower than T₂. Advantageously, T₃ is equal to or higher than T₁ + 5 °C, preferably equal to or higher than T₁ + 10 °C, more preferably equal to or higher than T₁ + 20 °C. Advantageously, T₃ is equal to or lower than T₂ - 5 °C, preferably equal to or lower than T₂ - 10 °C, more preferably equal to or lower than T₂ - 20 °C.

Advantageously, T₃ is between 30 °C and 80 °C, preferably between 40 °C and 70 °C, more preferably between 50 °C and 60 °C.

According to a first embodiment, x is 6, R₃ is CN, R₂ is (CH₂)₂, T₁ is between 40 °C and 60 °C, and T₂ is between 150 °C and 180 °C.

According to a second embodiment, x is 10, R₃ is H, R₂ is (CH₂)₂, T₁ is between 15 °C and 30 °C, T₃ is between 50 °C and 60 °C, and T₂ is between 150 °C and 180 °C.

Advantageously, when the imide ring is closed in the presence of a catalyst, the catalyst comprises or substantially consists of carbonyldiimidazole.

The present disclosure is further related to the use of a halogen-free polymeric binder according to the first aspect in a slurry for producing a cathode according to the second aspect.

### Description of the figures

Aspects of the invention will now be described in more detail with reference to the appended drawings, wherein same reference numerals illustrate same features and wherein:
- Figure 1 shows the H nuclear magnetic resonance (H-NMR) spectrum of a first halogen-free polymeric binder of the invention;
- Figure 2 shows the Fourier Transform Infrared Spectroscopy (FTIR) spectrum of the first halogen-free polymeric binder;
- Figure 3 shows the TGA analysis of the first binder;
- Figure 4 shows the DSC analysis of the first binder;
- Figure 5 shows the LSV analysis of the first binder;
- Figure 6 shows the H-NMR spectrum of a second halogen-free polymeric binder of the invention;
- Figure 7 shows the FTIR spectrum of the second binder;
- Figure 8 shows the TGA analysis of the second binder;
- Figure 9 shows the DSC analysis of the second binder;
- Figure 10 shows the LSV analysis of the second binder;
- Figure 11 shows the porosity of two inventive cathodes and a reference cathode;
- Figure 12 shows the discharge capacity and the coulombic efficiency of a first battery cell comprising a cathode obtained with the first binder;
- Figure 13 shows the voltage in function of the specific capacity for the first battery cell;
- Figure 14 shows the discharge capacity and the coulombic efficiency of a second battery cell comprising a cathode obtained with the second binder;
- Figure 15 shows the voltage in function of the specific capacity for the second battery cell.

### Detailed description of the invention

The halogen-free polymeric binder is according to formula (I) 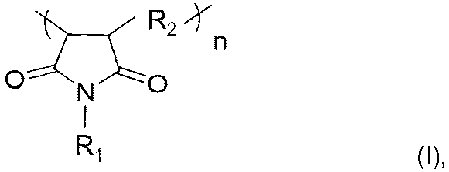 wherein
R₁ is (CH₂)ₓ-R₃, wherein x is between 1 and 20, preferably between 2 and 15, more preferably between 4 and 10, and wherein R₃ is H or CN;
R₂ is C₁-C₁₀ alkyl or C₂-C₁₀ alkenyl.

Advantageously, n is between 50 and 5000, preferably between 75 and 4500, more preferably between 100 and 4000.

Advantageously, the halogen-free polymeric binder has a molecular weight between 200 and 1500 kDa, preferably between 250 and 1400 kDa, more preferably between 300 and 1300 kDa, most preferably between 350 and 1200 kDa.

R₁ can be linear or branched, i.e. the (CH₂)ₓ-chain can be linear or branched. Advantageously, R₁, i.e. the (CH₂)ₓ-chain is linear.

R₂ can be linear or branched. Advantageously, R₂ is C₁-C₁₀ alkyl according to (CH₂)_{y} wherein y is between 1 and 10, preferably between 1 and 4, more preferably 1 or 2, i.e. CH₂ or (CH₂)₂.

An example of the halogen-free polymeric binder is a binder according to formula (II), wherein x is 6, R₃ is CN and R₂ is (CH₂)₂:

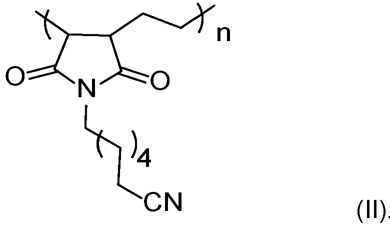

Another example of the halogen-free polymeric binder is a binder according to formula (III), wherein x is 10, R₃ is H and R₂ is (CH₂)₂:

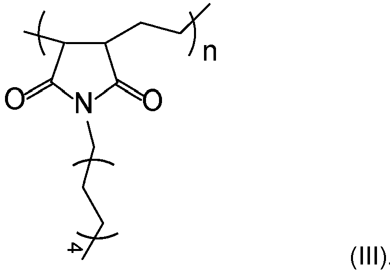

According to a first and preferred embodiment of the present disclosure, the halogen-free binders according to formula (I) are prepared by reacting an amino-derivative according to H₂N-R₁, wherein R₁ and x are as hereinabove described, with 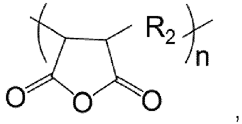 wherein R₂ and n are as hereinabove described.

The reaction takes place in the presence of dimethylformamide (DMF) as solvent and at a temperature T₁ between 15 °C and 80 °C.

The reaction leads to the formation of an intermediate polymer having a structure according to formula (IV) 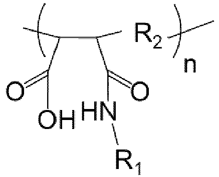 (IV), wherein R₁ and R₂ are as hereinabove described, i.e. a structure that does not comprise a ring-structure, such as an imide ring.

For example, when x is 6, R₃ is CN and R₂ is (CH₂)₂, the intermediate polymer has a structure according to formula (V):

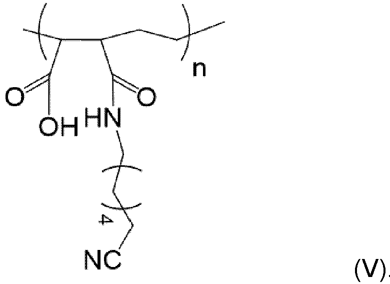

For example, when x is 10, R₃ is H and R₂ is (CH₂)₂, the intermediate polymer has a structure according to formula (VI):

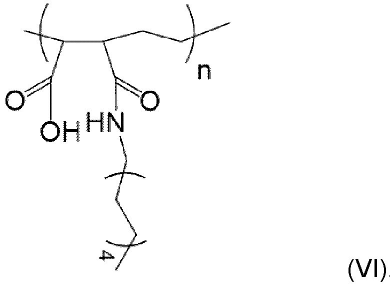

The intermediate polymer is then subjected to an imide ring closing step, wherein the -OH and -NH- groups of the intermediate polymer react, thereby closing the ring and obtaining the halogen-free polymeric binder of formula (I). Water is formed as by-product.

According to a first embodiment of imide ring closing step, imide ring closing is obtained by heating the intermediate polymer to a temperature higher than T₁, preferably a temperature between 100 °C and 250 °C, for example between 150 °C and 180 °C.

According to a second embodiment of imide ring closing step, imide ring closing is obtained at T₁ in the presence of a catalyst such as, without being limited thereto, carbonyldiimidazole.

Advantageously, the halogen-free polymeric binder materials of the present invention have a high thermal resistance, i.e. they can withstand temperatures of at least 300 °C, preferably at least 350 °C, more preferably at least 400 °C, as measured by thermogravimetric analysis (TGA) at 10 °C/min under an Ar flow of 60 mL/min .

Advantageously, the halogen-free polymeric binder materials of the present invention have a glass transition temperature comprised between 25 °C and 100 °C, preferably between 30 °C and 80 °C, more preferably between 40 °C and 60 °C, for example between 42 °C and 55 °C, as measured by Differential scanning calorimetry (DSC) at a heating/cooling rate of 10 °C/min from -80 °C to more than 200 °C for two cycles under an Ar atmosphere, wherein the results are taken in the second cycle to ensure that the thermal history of the polymer has been erased, thereby ensuring a reliable and reproducible value for the glass transition temperature.

Cathodes according to the present invention comprise or consist of a halogen-free polymeric binder of the invention, as well as an active compound and an electrically conductive material.

The active material can be any cathode active material known in the art. It will be understood that the cathode can comprise two or more active materials. Non-limiting examples of suitable active materials include Lithium Nickel Cobalt Manganese Oxide (NMC) such as LiNi_{0.8}Mn_{0.1}Co_{0.1}O₂ (NMC811) and LiNi_{0.6}Mn_{0.2}Co_{0.2}O₂ (NMC622), LiFePO₄, LiMnₓFe₁₋ₓPO4 (LMFP), LiMn_{1.5}Ni_{0.5}O (LMNO), and V₂O₅.

The electrically conductive compound can be any electrically conductive compound known in the art. Advantageously, the electrically conductive compound comprises or substantially consists of carbon. Non-limiting examples of suitable electrically conductive materials include carbon-comprising compounds, such as carbon black (for example C-65), carbon nanotubes (CNT), graphene and vapour grown carbon fibres (VGCF).

Advantageously, the cathode comprises a cathode current collector. The cathode current collector can be any current collector for a cathode known in the art, such as an aluminium foil, optionally comprising a carbon-comprising coating layer. When the cathode comprises a cathode current collector, the cathode advantageously comprises a layer comprising an active material, an electrically conductive compound and a binder as hereinabove described, the layer being into contact with, and advantageously adhered or attached to the cathode current collector.

A non-limiting example of a cathode of the invention is a cathode comprising a cathode current collector and a layer comprising between 85 % and 95 % by weight of NMC, between 2 % and 10 % of a carbon black-comprising electrically conductive compound and between 2 % and 10 % by weight of an inventive halogen-free polymeric binder, based on the total weight of the layer. Advantageously, the layer consists of NMC, a carbon black-comprising electrically conductive compound and an inventive halogen-free binder, i.e., the sum of their % by weight in the layer amounts to 100 %.

A further non-limiting example of a cathode of the invention is a cathode comprising a cathode current collector and a layer comprising between 75 % and 85 % by weight of LiFePO₄, between 5 % and 15 % of a carbon black-comprising electrically conductive compound and between 5 % and 15 % by weight of an inventive halogen-free polymeric binder, based on the total weight of the layer. Advantageously, the layer consists of LiFePO₄, a carbon black-comprising electrically conductive compound and an inventive halogen-free binder, i.e., the sum of their % by weight in the layer amounts to 100 %.

Cathodes according to the present invention can be made by methods known in the art. A preferred method comprises preparing a slurry comprising a halogen-free polymeric binder of the invention, an active material and an electrically conductive compound as described hereinabove in a solvent, and tape casting the slurry on a cathode current collector.

Advantageously, the slurry comprises a solid content between 25 % and 75 % by weight, preferably between 30 % and 70 % by weight, more preferably between 35 % and 65 % by weight, most preferably between 40 % and 60 % by weight, such as between 45 % and 55 % by weight, based on the total weight of the slurry.

Advantageously, the solid content of the slurry comprises between 75 % and 95 % by weight of an active material, between 1 % and 10 % by weight of an electrically conductive compound and between 1 % and 10 % by weight of the halogen-free polymeric binder.

Advantageously, the solvent is selected from the group consisting of N-Methyl-2-Pyrrolidone (NMP), acetonitrile, methyl-tetrahydrofuran, cyclohexanone, DMF and propylene carbonate (PC).

Advantageously, the cathodes have an adhesion strength to the cathode current collector of at least 20 N/m, preferably at least 25 N/m, more preferably at least 30 N/m, most preferably at least 40 N/m, as measured according to test standard ISO-8510-1.

### Examples

### Example 1

HO-(CH₂)₆-NH₂ was reacted with di-tert-butyl dicarbonate at room temperature for 15 hours in the presence of tetrahydrofuran. After removing the solvent, the reaction product was placed in diethyl ether and was washed with acetic acid and sodium bicarbonate aqueous solution. The solvent was removed under vacuum. The obtained reaction product was then reacted with methanesulfonyl chloride / triethylamine at room temperature for three hours in the presence of dichloromethane (DCM). The mixture was then washed with aqueous sodium bicarbonate. The dichloromethane was removed and the resulting product was reacted with KCN at 80 °C for 18 hours in the presence of DMF as solvent. The reaction product was then placed in ethyl acetate and a water mixture and was washed with water and brine. Organics were collected and solvent removed under vacuum. The obtained reaction product was then reacted with HCl in 1,4-dioxane at a temperature between 0 °C and room temperature for 5 hours. The reaction was quenched with sodium bicarbonate, the product was extracted in dichloromethane and treated with sodium hydroxide to obtain the product H₂N-(CH₂)₆-CN (the "amino-derivative").

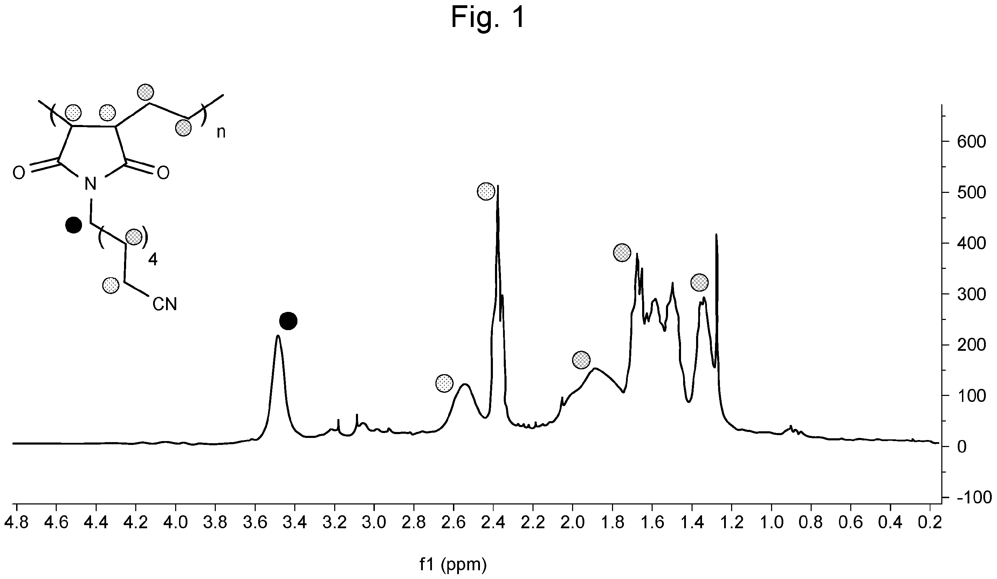

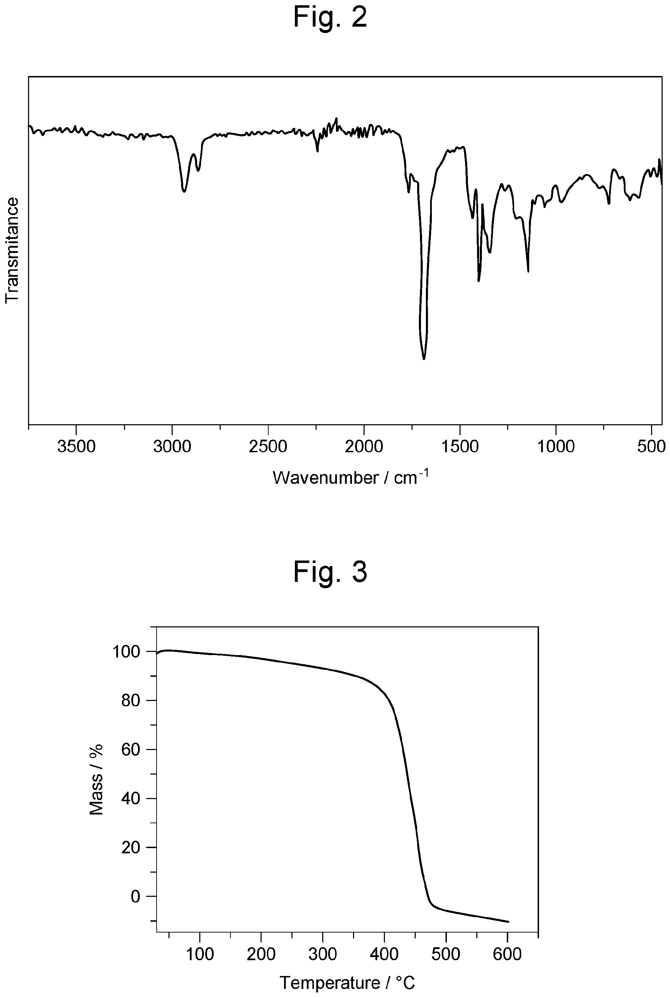

The amino-derivative was then reacted with 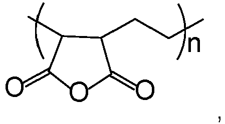 wherein n was between 100 and 4000, for 24 hours at 50 °C in the presence of DMF. The obtained reaction product was according to formula (V), and was reacted further at 170 °C for 16 hours in the presence of DMF. Figs. 1 and 2 show the H nuclear magnetic resonance (H-NMR) spectrum and the Fourier Transform Infrared (FTIR) spectrum of the obtained halogen-free polymeric binder, respectively.

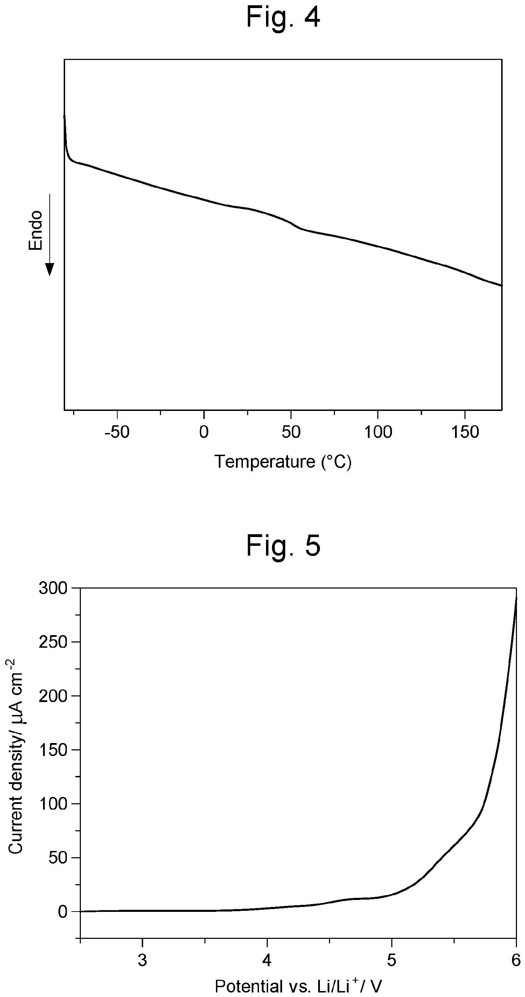

Fig. 3 shows the TGA analysis of the binder, indicating a high thermal resistance surpassing 400 °C. Fig. 4 shows the DSC analysis of the binder, indicating a glass transition temperature of 52 °C. Fig. 5 shows the Linear sweep voltammetry (LSV) analysis of the polymeric binder in a propylene carbonate (PC) solution, indicating a high oxidation stability.

### Example 2

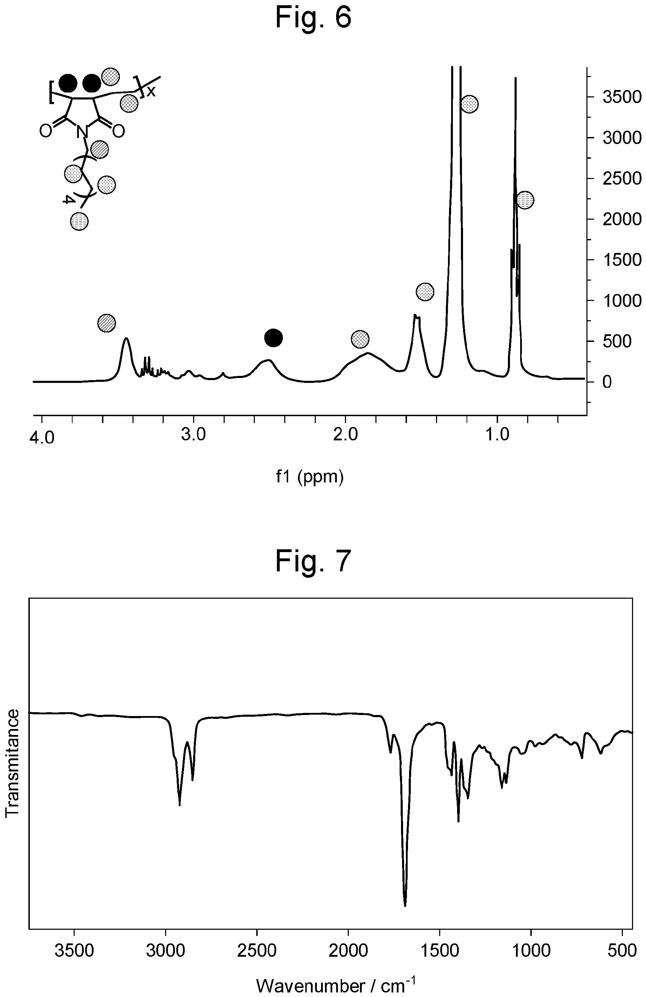

H₂N-(CH₂)₉-CH₃ as amino-derivative was reacted with 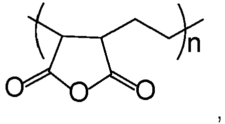 wherein n was between 100 and 4000, for 16 hours at room temperature in the presence of DMF. The obtained reaction product was according to formula (VI), and was reacted further at 50 °C for 8 hours in the presence of DMF, and then at 170 °C for 16 hours in the presence of DMF. Figs. 6 and 7 show the H-NMR spectrum and the FTIR spectrum of the obtained halogen-free polymeric binder, respectively.

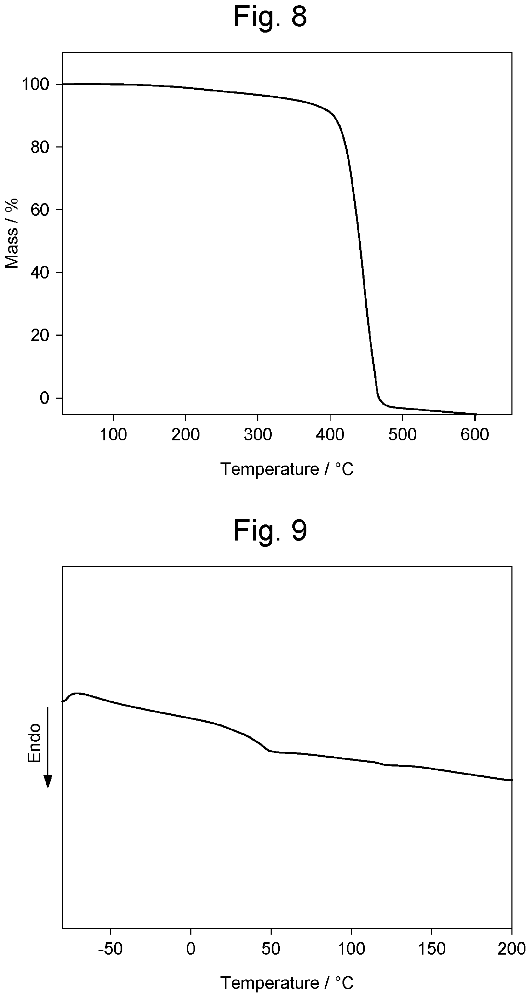

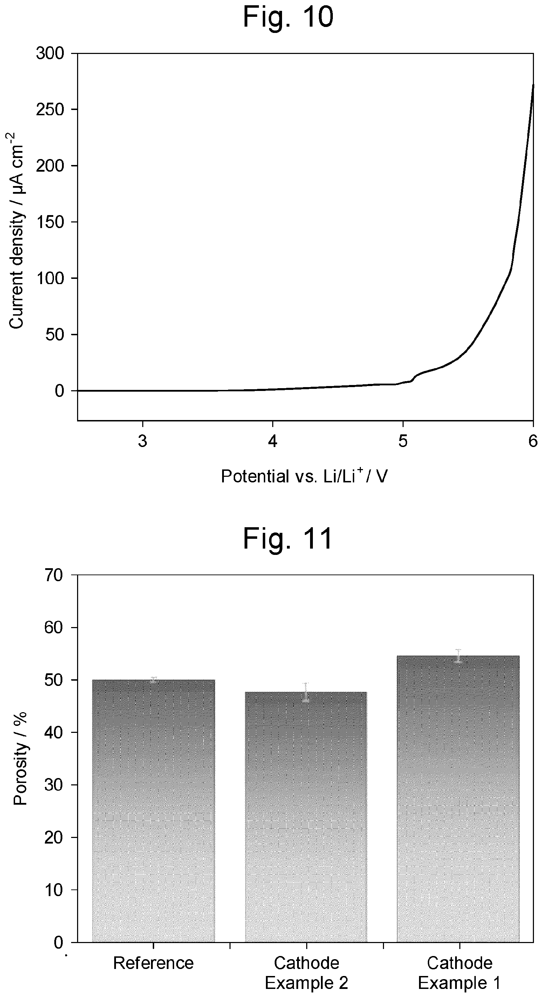

Fig. 8 shows the TGA analysis of the binder, indicating a high thermal resistance surpassing 400 °C. Fig. 9 shows the DSC analysis of the binder, indicating a glass transition temperature of 44 °C. Fig. 10 shows the LSV analysis of the polymeric binder in a PC solution, indicating a high oxidation stability.

### Example 3

The halogen-free polymeric binders of Examples 1 and 2 were then used to produce a cathode. A first slurry was prepared with the binder of Example 1, having a solid content of 49-52 wt.%, and a second slurry was prepared with the binder of Example 2, having a solid content of 46-49 wt.%. The solvent used for both slurries was NMP. The solid content of each slurry comprised 90 wt.% of NMC622 as active material, 5 wt.% of carbon black (C-65) as electrically conductive compound, and 5 wt.% of the respective halogen-free polymeric binder. This led to the slurries having a loading of active material of between 3 and 4 mAh.cm⁻².

The slurries were then cast in a Dr. Blade (doctor blading coating technique) on a carbon-coated aluminium foil as cathode current collector, thereby obtaining the cathode. In other words, the cathode consisted of a cathode current collector and a layer consisting of NMC622, C-65 and the halogen-free polymeric binder.

A reference cathode was prepared as well, by casting in a Dr. Blade a slurry having a similar solid content and loading, wherein the solid content comprised 90 wt.% of NMC622 as active material, 5 wt.% of carbon black (C-65) as electrically conductive compound, and 5 wt.% of Polyvinylidene (di)fluoride (PVdF) as binder.

The porosity of all three cathodes, more particularly the porosity of the layers on the current collector, was measured by dividing the density of the cathode by its theoretical density. From Fig. 11 it is clear that the inventive cathodes have a porosity which is similar to that of the reference cathode.

The peeling strength, expressed as adhesion strength and determined according to ISO-8510-1 was also measured. The cathode obtained with the binder of Example 1 had an adhesion strength of 58 N/m, the cathode obtained with the binder of Example 2 has an adhesion strength of 42 N/m, and the reference cathode with PVdF had an adhesion strength of 41 N/m. In other words, the halogen-free cathodes of the invention had an adhesion strength which was at least as good as, and even better, than that of the reference fluoride-containing cathode.

### Example 4

Three coin cells were assembled with the inventive cathodes of Example 3. Lithium metal was used as anode, and the electrolyte was a liquid electrolyte comprising 1 M LiPF6 in a solvent mixture comprising ethylene carbonate and dimethylcarbonate in a 1:1 volume ratio.

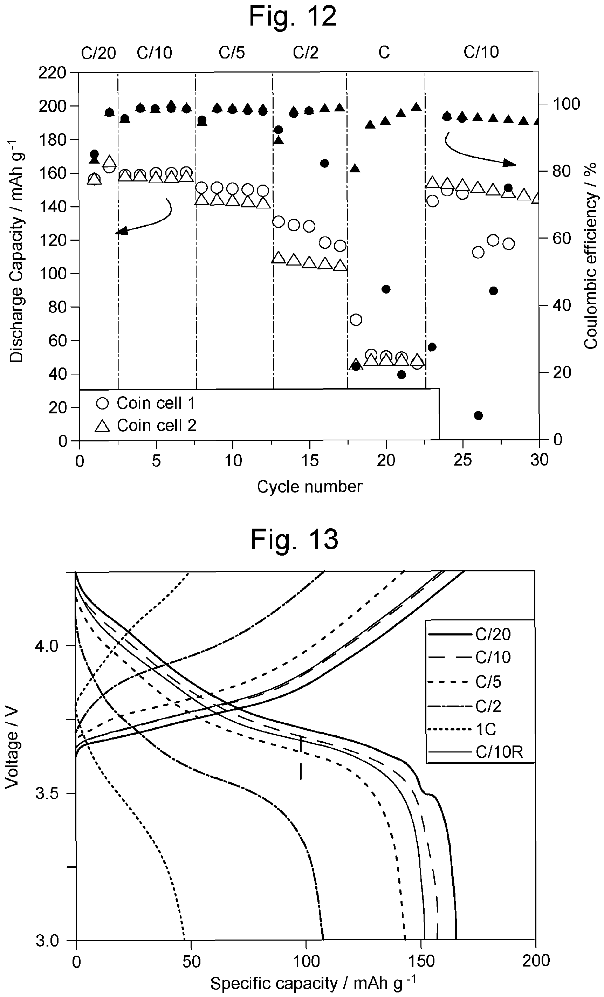

Two of the coin cells were cycled at 25 °C, at different current rates, i.e, C/20, C/10, C/5, C/2 and 1C for at least 30 cycles without any problems. Fig. 12 shows the discharge capacity and the coulombic efficiency of both coin cells comprising the cathode of Example 3, obtained with the binder of Example 1. It is clear that very high coulombic efficiencies close to 100 % are obtained, as well as an excellent rate-capability with high delivered capacities, despite harsh testing conditions. This indicates that the halogen-free polymeric binder provides an excellent adhesion and allows the cyclability of the cells. It is further clear that the results for both coin cells are very similar, indicating a very stable and reproducible behaviour of the inventive cathode and thus of the halogen-free polymeric binder. Fig. 13 shows the voltage in function of the specific capacity.

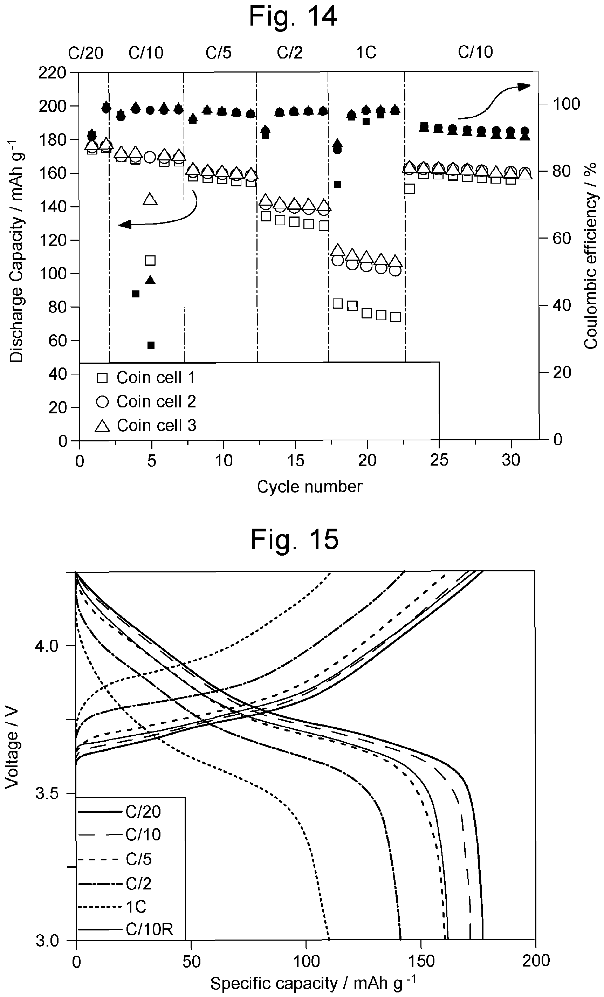

Fig. 14 shows the discharge capacity and the coulombic efficiency of the three coin cells comprising the cathode of Example 3 obtained with the binder of Example 1. Despite harsh testing conditions, it is clear that very high coulombic efficiencies close to 100 % are obtained, as well as an excellent rate-capability with high delivered capacities. This indicates that the halogen-free polymeric binder provides an excellent adhesion and allows the cyclability of the cells. It is further clear that the results for all coin cells are very similar, indicating a very stable behaviour of the inventive cathode and thus of the halogen-free polymeric binder. Fig. 15 shows the voltage in function of the specific capacity.

## Claims

1. A halogen-free polymeric binder for a cathode according to formula (I) 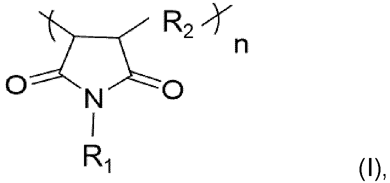 wherein
R₁ is (CH₂)ₓ-R₃, wherein x is between 1 and 20 and R₃ is H or CN;
R₂ is C₁-C₁₀ alkyl or C₂-C₁₀ alkenyl; and
n is between 50 and 5000.

2. The halogen-free polymeric binder according to claim 1, wherein x is 6, R₃ is CN and R₂ is (CH₂)₂.

3. The halogen-free polymeric binder according to claim 1, wherein x is 10, R₃ is H and R₂ is (CH₂)₂.

4. A cathode comprising the halogen-free polymeric binder according to any one of the preceding claims.

5. A cathode according to claim 4, comprising between 75 % and 95 % by weight of an active material, between 1 % and 15 % by weight of an electrically conductive compound and between 1 % and 15 % by weight of the halogen-free polymeric binder, based on the total weight of the cathode.

6. The cathode according to claim 4 or claim 5, having a porosity of at least 20 %.

7. The cathode according to any one of claims 4 to 6, wherein the active material comprises one or more of Lithium Nickel Cobalt Manganese Oxide (NMC), preferably NMC811 or NMC622, LiFePO₄ and V₂O₅.

8. The cathode according to any one of claims 4 to 7, wherein the electronically conductive compound comprises carbon black.

9. The cathode according to any one of claims 4 to 8, comprising between 85 % and 95 % by weight of NMC, between 2 % and 10 % of a carbon black-comprising electrically conductive compound and between 2 % and 10 % by weight of the halogen-free polymeric binder according to any one of the claims 1 to 3, based on the total weight of the cathode.

10. The cathode according to any one of claims 4 to 8, comprising between 75 % and 85 % by weight of LiFePO₄, between 5 % and 15 % of a carbon black-comprising electrically conductive compound and between 5 % and 15 % by weight of the halogen-free polymeric binder according to any one of the claims 1 to 3, based on the total weight of the cathode.

11. A method for producing a halogen-free polymeric binder of any one of claims 1 to 3, comprising:
- reacting an amino derivative according to H₂N-R₁, wherein R₁ is (CH₂)ₓ-R₃, wherein x is between 1 and 20 and R₃ is H or CN; with 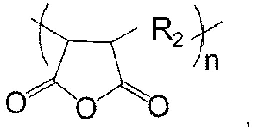 wherein R₂ is C₁-C₁₀ alkyl or C₂-C₁₀ alkenyl; and n is between 50 and 5000,
in the presence of dimethylformamide at a temperature T₁ between 15 °C and 80 °C, thereby forming an intermediate polymer; and
- imide ring closing of the intermediate polymer, thereby forming the halogen-free polymeric binder, wherein the imide ring closing is performed by heating the intermediate polymer to a temperature T₂ between 100 °C and 250 °C, or in the presence of a catalyst at T₁.

12. The method according to claim 11, wherein the imide ring is closed by heating the intermediate polymer to T₂, wherein heating to T₂ comprises heating to an intermediate temperature T₃, wherein T₃ is higher than T₁ and lower than T₂, preferably wherein T₃ is between 30 °C and 80 °C, followed by heating from T₃ to T₂.

13. The method according to claim 11, wherein x is 6, R₃ is CN and R₂ is (CH₂)₂, and wherein T₁ is between 40 °C and 60 °C and T₂ is between 150 °C and 180 °C.

14. The method according to claim 12, wherein x is 10, R₃ is H and R₂ is (CH₂)₂ and wherein T₁ is between 15 °C and 30 °C, T₃ is between 50 °C and 60 °C and T₂ is between 150 °C and 180 °C.

15. The method according to claim 11, wherein the imide ring is closed in the presence of a catalyst at T₁, wherein the catalyst comprises carbonyldiimidazole.
